# EUROPÄISCHE PATENTSCHRIFT

(11) **EP 3 286 053 B1**
(45) Veröffentlichungstag und Bekanntmachung des Hinweises auf die Patenterteilung: **12.06.2019**
(21) Anmeldenummer: 16719050.3
(22) Anmeldetag: 20.04.2016
(51) Int. Cl.: B60T 13/38, B60T 13/68

(54) **PARKBREMSEINRICHTUNG FÜR KRAFTFAHRZEUGE**
PARKING BRAKE SYSTEM FOR VEHICLES
SYSTÈME DE FREIN DE VERROUILLAGE POUR VÉHICULES

(30) Priorität: 22.04.2015 DE 102015106145
(43) Veröffentlichungstag der Anmeldung: 28.02.2018
(73) Patentinhaber: KNORR-BREMSE Systeme für Nutzfahrzeuge GmbH, 80809 München (DE)
(72) Erfinder: LEINUNG, Andreas, 81245 München (DE); MICHALSKI, Max, 85579 Neubiberg (DE); USLU, Mustafa, 80997 München (DE)
(86) Internationale Anmeldenummer: PCT/EP2016/058730
(87) Internationale Veröffentlichungsnummer: WO 2016/169968

(56) Entgegenhaltungen:
- DE-B3-102008 007 877
- US-A- 3 981 545

## Beschreibung

Die vorliegende Erfindung betrifft eine Parkbremseinrichtung für Kraftfahrzeuge nach dem Oberbegriff des Anspruchs 1.

Parkbremsen (auch Feststellbremsen genannt) von Nutzfahrzeugen einschließlich Anhängern sowie Schienenfahrzeugen sind heute regelmäßig mit Federspeicherbremszylindern ausgestattet, die in Lösestellung einen Federkompressionsraum mit Druckluft beaufschlagen und dadurch die Feder gespannt halten, während zum Parkbremsen der Federkompressionsraum entlüftet, d.h. mit Atmosphärendruck verbunden wird, so dass der Bremszylinder unter Wirkung der Feder eine Bremskraft erzeugt (vgl. Bosch, Kraftfahrtechnisches Taschenbuch, 22. Auflage, Düsseldorf, 1995, S. 648).

Aus der WO 2014/009457 A1, der DE 10 2009 059 816 B3 und der DE 10 2008 007 877 B3 ist bereits eine gattungsgemäße Parkbremseinrichtung für Kraftfahrzeuge bekannt, bei der stromaufwärts der Steuerventileinrichtung wenigstens ein Magnetventil mit einem Entlüftungsausgang vorgesehen ist, mittels dessen die Parkbremseinrichtung entlüftet werden kann.

Die Bauart des Magnetventils bestimmt dabei die Entlüftungsmöglichkeiten der Parkbremseinrichtung.

Es ist daher die Aufgabe der vorliegenden Erfindung, eine Parkbremseinrichtung der eingangs genannten Art in vorteilhafter Weise weiter zu bilden, insbesondere dahingehend, dass eine Parkbremseinrichtung vergleichsweise einfach aufgebaut sein und vergleichsweise einfach und schneller als bei bislang bekannten Lösungen entlüftet werden kann.

Diese Aufgabe wird erfindungsgemäß gelöst durch eine Parkbremseinrichtung mit den Merkmalen des Anspruchs 1. Danach ist vorgesehen, dass eine Parkbremseinrichtung für Kraftfahrzeuge wenigstens eine Druckluftquelle und wenigstens eine Steuerventileinrichtung aufweist, wobei die Steuerventileinrichtung wenigstens einen ersten Anschluss und wenigstens einen zweiten Anschluss aufweist, die jeweils über eine erste Verbindungsleitung und eine zweite Verbindungsleitung mit der Druckluftquelle verbindbar sind, wobei die Verbindungsleitungen stromabwärts der Druckluftquelle angeordnet sind, wobei in wenigstens einer Verbindungsleitung ein Schnellentlüftungsventil angeordnet ist.

Die Erfindung basiert auf dem Grundgedanken, dass die Entlüftung nicht über die vorhandenen sonstigen Elemente wie Magnetventile, sondern über ein gesondertes Entlüftungsbauteil, nämlich ein Schnellentlüftungsventil, erfolgt. Dadurch wird es möglich, eine Schnellentlüftung zu erreichen, die unabhängig von der Bauform eines sonstigen Elementes der Parkbremseinrichtung ist. Ein Schnellentlüftungsventil kann dabei entsprechend der gewünschten Entlüftungszeitvorgabe auf den benötigten Luftmassendurchsatz ausgelegt werden. Im Vergleich zu den bislang und auch weiterhin genutzten Magnetventilen mit Entlüftungsausgang können wesentlich größere Entlüftungsquerschnitte realisiert werden, da man nun nicht mehr durch die Baugröße des Magnetventils im Hinblick auf den Entlüftungsquerschnitt limitiert ist. Das Schnellentlüftungsventil kann stromaufwärts der Steuerventileinrichtung und stromabwärts der Druckluftquelle angeordnet sein. Vorteilhafterweise ist das Schnellentlüftungsventil in einer Eingangsleitung der Steuerventileinrichtung angeordnet.

Von Vorteil ist insbesondere auch, dass entlüftete Bereiche einer Parkbremseinrichtung selbst bei z.B. bei Kälte auftretenden (geringfügigen) Undichtigkeiten aufgrund des vergleichsweise großen Entlüfungsquerschnitts des Schnellentlüftungsventils sicher ein niedriges Druckniveau nahe Atmosphärendruck beibehalten, wodurch z.B. ein vollständiges Anliegen der Feststellbremse mit vollständiger Bremskraft im Parkzustand sichergestellt ist.

Sofern die Steuerventileinrichtung ein pneumatisches Bistabil-Ventil ist bzw. aufweist, das abhängig vom Druck schaltet, verhält es sich typischerweise so, dass man zum Umschalten des Bistabil-Ventils auf den Druckabbau warten muss, bis das Bistabil-Ventil umschalten kann. Durch den Einsatz des Schnellentlüftungsventils kann somit das Umschalten wesentlich schneller erfolgen.

Des Weiteren kann vorgesehen sein, dass stromabwärts der Druckluftquelle ein Rückschlagventil vorgesehen ist. Dadurch wird erleichtert, die Druckverhältnisse in der Parkbremseinrichtung einstellen zu können.

Insbesondere ist möglich, dass das Schnellentlüftungsventil stromabwärts des Rückschlagventils angeordnet ist. Diese Ausgestaltung ermöglicht eine definierte und schnelle Entlüftung von zumindest Teilen bzw. Abschnitten der Parkbremseinrichtung.Des Weiteren kann vorgesehen sein, dass in der ersten Verbindungsleitung ein erstes Magnetventil angeordnet ist und in der zweiten Verbindungsleitung ein zweites Magnetventil angeordnet ist, wobei das wenigstens eine Schnellentlüftungsventil zwischen einem Magnetventil und der Steuerventileinrichtung angeordnet ist. Dies ermöglicht es, eine Entlüftung über das Schnellentlüftungsventil im Wesentlichen direkt vor der Steuerventileinrichtung zu realisieren. Insbesondere ist es dann nicht erforderlich, dass der zu entlüftende Luftmassenstrom aus der Parkbremseinrichtung noch durch eines der Magnetventile geführt werden muss. Vielmehr ist das Schnellentlüftungsventil direkt angrenzend bzw. so nah wie möglich an der Steuerventileinrichtung angeordnet.

Das Schnellentlüftungsventil kann nur in der zweiten Verbindungsleitung vorhanden sein. Hierdurch wird insgesamt der Aufbau der Parkbremseinrichtung vereinfacht. Denkbar ist in diesem Zusammenhang auch, dass nur ein einziges Schnellentlüftungsventil in der Parkbremseinrichtung vorgesehen ist.

Außerdem ist möglich, dass der für die Entlüftung nutzbare Ventilquerschnitt des Schnellentlüftungsventils wenigstens ca. doppelt so groß, insbesondere ca. viermal so groß, wie der nutzbare Ventilquerschnitt übriger Ventile der Parkbremseinrichtung mit Entlüftungsausgang bzw. Entlüftungsfunktion ist.

Das zweite Magnetventil kann einen Entlüftungsausgang aufweisen. Dadurch kann die Entlüftung über das Schnellentlüftungsventil zusätzlich unterstützt werden.

Weiter kann vorgesehen sein, dass das Schnellentlüftungsventil kein Magnetventil ist. Dadurch wird auf ein vergleichsweise komplexes Bauteil verzichtet und der Aufbau der Parkbremseinrichtung insgesamt vereinfacht.

Das Schnellentlüftungsventil kann durch den Zuleitungsdruck in Richtung Verbraucher geöffnet werden und beim Umschalten durch den Verbraucherdruck seinen Abluftanschluss freigeben.

Bei dem Schnellentlüftungsventil handelt es sich beispielsweise um ein Ventil mit Rückschlagfunktion, das mit einer Entlüftungsfunktion zur Entlüftung direkt ins Freie kombiniert ist.

Des Weiteren kann vorgesehen sein, dass das Schnellentlüftungsventil im Bereich des Abluftanschlusses eine zumindest teilweise elastische Entlüftungsscheibe aufweist. Durch die Entlüftungsscheibe wird beispielsweise erreicht, dass nur Luft aus dem Schnellentlüftungsventil durch den Abluftanschluss austreten kann, allerdings keine Luft und damit auch keine Verschmutzungen durch den Abluftanschluss in das Schnellentlüftungsventil eindringen können.

Weitere Einzelheiten und Vorteile der vorliegenden Erfindung sollen nun anhand von in den Zeichnungen dargestellten Ausführungsbeispielen näher erläutert werden.

Es zeigen:
- Figur 1:: eine schematische Darstellung eines ersten Ausführungsbeispiels einer erfindungsgemäßen Parkbremseinrichtung für Kraftfahrzeuge;
- Figur 2:: eine Schnittdarstellung durch ein Schnellentlüftungsventil in einer ersten Stellung (Arbeitsstellung bzw. geschlossene Stellung) für eine erfindungsgemäße Parkbremseinrichtung für Kraftfahrzeuge wie im Zusammenhang mit Figur 1 beschrieben;
- Figur 3:: eine Schnittdarstellung durch das Schnellentlüftungsventil in einer zweiten Stellung (Entlüftungsstellung bzw. geöffnete Stellung) gemäß Figur 2;
- Figur 4:: eine schematische Darstellung eines zweiten Ausführungsbeispiels einer erfindungsgemäßen Parkbremseinrichtung für Kraftfahrzeuge; und
- Figur 5:: eine schematische Darstellung eines dritten Ausführungsbeispiels einer erfindungsgemäßen Parkbremseinrichtung für Kraftfahrzeuge.

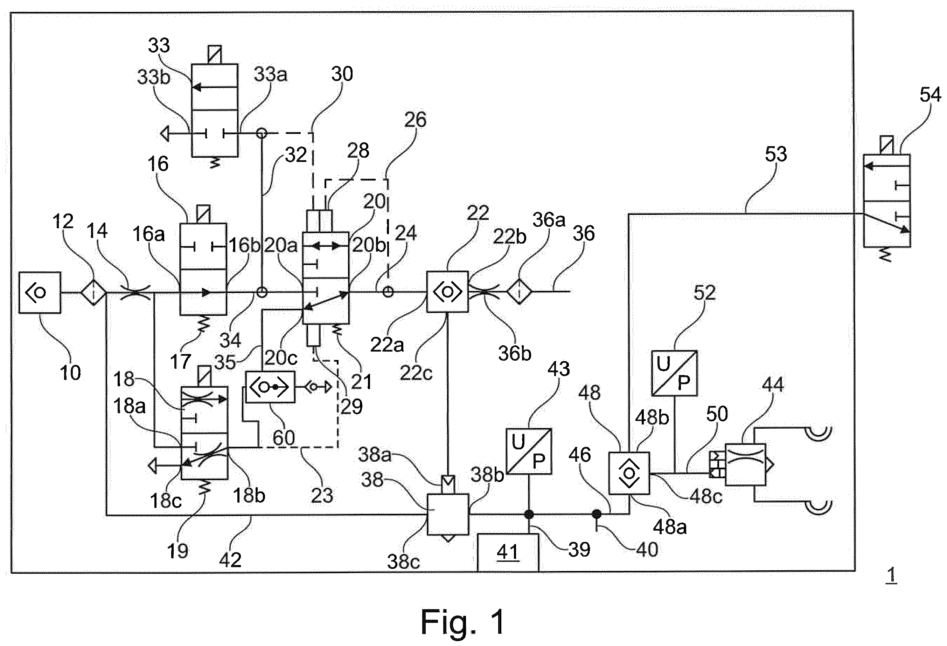

Figur 1 zeigt eine schematische Darstellung eines ersten Ausführungsbeispiels einer erfindungsgemäßen Parkbremseinrichtung 1 für Kraftfahrzeuge.

Die Parkbremseinrichtung 1 weist ein Rückschlagventil 10 auf, mittels dessen die Parkbremseinrichtung 1 an einer nicht näher dargestellten Druckluftversorgung angeschlossen ist.

Stromabwärts des Rückschlagventils 10 können eine Filtereinheit 12 und eine Drossel 14 vorgesehen sein.

Die Parkbremseinrichtung 1 hat weiter ein erstes elektrisch steuerbares Magnetventil 16 und ein zweites elektrisch steuerbares Magnetventil 18, an deren Ausgängen ein pneumatisch steuerbares Steuerventil 20 als Steuerventileinrichtung 20 angeschlossen ist.

Die beiden Magnetventile 16 und 18 sind über das Rückschlagventil 10 mit der nicht dargestellten Druckluftquelle des Fahrzeugs verbunden, über die Druckluft zuführbar ist.

Beide Magnetventile 16 und 18 werden jeweils durch eine Feder 17 bzw. 19 in eine Ruhelage gebracht.

Das Magnetventil 16 ist als sogenanntes 2/2-Wegeventil ausgebildet. Durch die Feder 17 ist das Magnetventil 16 monostabil und zwar stabil in der Ruhelage.

Grundsätzlich ist aber auch denkbar, dass das Magnetventil 16 als 3/2-Wegeventil ausgebildet ist. Eine derartige Konfiguration ist beispielsweise in der DE 10 2008 007 877 B3 gezeigt.

Die Drossel 14 ist hier stromaufwärts des Magnetventils 16 angeordnet. Denkbar ist aber auch, dass die Drossel 14 stromabwärts des Magnetventils angeordnet ist.

Das Magnetventil 18 ist ein sogenanntes 3/2-Wegeventil. Es ist zugleich als Steuer- und Entlüftungsventileinrichtung mit integrierter Drossel ausgebildet. Durch die Feder 19 ist das Magnetventil 18 monostabil und zwar stabil in der Ruhelage.

Denkbar ist auch, dass das Magnetventil 18 als einfaches monostabiles 2/2-Wegeventil ausgebildet sein kann (dann ohne Entlüftungsfunktion).

Ebenso wird das pneumatisch steuerbare Steuerventil 20 durch wenigstens eine Feder 21 in eine Ruhelage gebracht.

Das Steuerventil 20 ist als ein 3/2-Wegeventil ausgeführt. Es ist jedoch durch die Art seiner Verschaltung bistabil ausgelegt. Mögliche Ausführungsformen eines derartigen Steuerventils sind beispielsweise in der DE 10 2009 059 816 A1 oder in der WO 2014/009457 A1 gezeigt.

In der Figur 1 sind jeweils die Ruhelagen dargestellt, bei denen die entsprechenden Ventile 16, 18 bzw. 20 deaktiviert sind.

Die Parkbremseinrichtung 1 befindet sich dabei im Parkmodus.

Das erste Magnetventil 16 hat einen Eingang 16a und einen Ausgang 16b.

In ähnlicher Weise hat das zweite Magnetventil 18 einen Eingang 18a, einen Ausgang 18b und einen Entlüftungsausgang 18c.

In der dargestellten Ruhelage verbindet das Magnetventil 16 den Eingang 16a mit dem Ausgang 16b.

Das zweite Magnetventil 18 sperrt in der dargestellten Ruhestellung den Eingang 18a ab und verbindet den Ausgang 18b mit dem Entlüftungsausgang 18c. In der aktivierten Position verbindet das zweite Magnetventil 18 dagegen den Eingang 18a mit dem Ausgang 18b, während der Entlüftungsausgang 18c abgesperrt ist.

Das pneumatisch gesteuerte Steuerventil 20 hat ebenfalls drei Anschlüsse und zwar einen Eingang 20a, einen Ausgang 20b und einen weiteren Anschluss 20c. Der Eingang 20a ist mit dem Ausgang 16b des ersten Magnetventils 16 verbunden. Der Ausgang 20b ist über eine Verbindungsleitung 24 mit einem Eingang 22a eines Select-High-Ventils 22 verbunden, während der Anschluss 20c mit dem Ausgang 18b des zweiten Magnetventils 18 verbunden ist.

Das pneumatisch steuerbare Steuerventil 20 sperrt in der abgebildeten Ruhestellung den Eingang 20a ab und verbindet den Ausgang 20b mit dem Anschluss 20c. In der aktivierten Stellung des Steuerventils 20 ist dagegen der Eingang 20a mit dem Ausgang 20b verbunden und der Anschluss 20c ist abgesperrt.

Das pneumatisch steuerbare Steuerventil 20 kann ein normales Pneumatikventil sein. Es kann auch ein pneumatisch steuerbares Servo-Ventil sein. Schließlich kann das Steuerventil 20 auch elektrisch steuerbar sein, d.h. es kann ein bistabiles elektrisch steuerbares Magnetventil sein.

Von der Verbindungsleitung 24 zweigt eine Steuerleitung 26 ab. Die Steuerleitung 26 ist mit einem pneumatischen Steuereingang 28 des Steuerventils 20 verbunden.

Eine weitere Steuerleitung 30 zum pneumatischen Steuereingang 28 des Steuerventils 20 zweigt von einer Verbindungsleitung 32 ab. Die Verbindungsleitung 32 zweigt von einer Verbindungsleitung 34 ab, die den Ausgang 16b des Magnetventils 16 mit dem Eingang 20a des Steuerventils 20 verbindet.

Die Verbindungsleitung 32 führt zu einem Entlüftungsventil 33, das ein 2/2-Wegeventil (Magnetventil) ist, und ist mit dessen Eingang 33a verbunden. Das Entlüftungsventil 33 weist weiter einen Entlüftungsausgang 33b auf. In der dargestellten Stellung ist der Entlüftungsausgang 33b gesperrt.

Ein zweiter Eingang 22b des Select-High-Ventils 22 ist mit einer pneumatischen Leitung 36 verbunden, die eine pneumatische Steuerleitung vom Bremspedal des Fahrzeugs ist und die mit Druck der Betriebsbremse des Fahrzeugs beaufschlagt ist. In der Steuerleitung 36 sind eine Filtereinheit 36a und eine Drossel 36b angeordnet.

Der Ausgang 22c des Select-High-Ventils 22 ist mit einem pneumatischen Steuereingang 38a eines Relaisventils 38 verbunden, dessen Ausgang 38b mit einer Zuleitung 39 zu der pneumatischen Bremsvorrichtung für das Kraftfahrzeug bzw. Zugfahrzeug und mit einer weiteren Leitung 40 verbunden ist.

Die pneumatische Bremsvorrichtung 41 des Kraftfahrzeugs bzw. Zugfahrzeugs kann eine Druckkammer eines Federspeicher-Bremszylinders (nicht näher dargestellt) aufweisen. Die Federspeicherbremse ist dann gelöst, wenn die genannte Druckkammer des Federspeicher-Bremszylinders mit Druckluft beaufschlagt ist. Umgekehrt ist die Parkbremse durch die Feder des Federspeicher-Bremszylinders aktiviert, wenn die genannte Druckkammer entlüftet ist.

Das Relaisventil 38 weist weiter einen Eingang 38c auf, der mit einer Druckluftanschlussleitung 42 verbunden ist, die stromabwärts der Filtereinheit 12 abzweigt. Somit ist der Versorgungseingang 38c des Relaisventils 38 über das Rückschlagventil 10 direkt mit der Druckluftversorgung der Parkbremseinrichtung 1 verbunden.

An der Abzweigung der Druckluftanschlussleitung 39 ist auch ein Druckluftsensor 43 vorgesehen.

Stromabwärts des Relaisventils 38 ist neben der pneumatischen Bremsvorrichtung 41 für das Kraftfahrzeug bzw. Zugfahrzeug auch ein Anhängersteuermodul 44 angeordnet.

Das Anhängersteuermodul 44 ist dabei stromabwärts des Leitungszweigs 39 zu der pneumatischen Bremsvorrichtung angeordnet.

Des Weiteren ist stromaufwärts des Anhängersteuermoduls 44 im zum Anhängersteuermodul 44 führenden Leitungszweig 46 wenigstens ein weiteres Select-High-Ventil 48 angeordnet.

Stromaufwärts des Anhängersteuermoduls 44 ist im zum Anhängersteuermodul 44 führenden Leitungszweig 50 wenigstens ein Drucksensor 52 angeordnet und zwar stromabwärts des Select-High-Ventils 48 und stromaufwärts des Anhängersteuermoduls 44.

Das Select-High-Ventil 48 weist einen ersten Eingang 48a, einen zweiten Eingang 48b und einen Ausgang 48c auf.

Der erste Eingang 48a ist mit dem Leitungszweig 46 verbunden.

Der zweite Eingang 48b ist mit einer Steuerleitung 53 verbunden, über die das Select-High-Ventil 48 mittels eines Magnetventils 54 ansteuerbar ist. Das Magnetventil 54 ist ein EAC-Ventil 54 des Luftaufbereitungssystems der Parkbremseinrichtung 1.

Somit ist ein Eingang, nämlich der Eingang 48b des Select-High-Ventils 48, mit einem Ventil des Luftaufbereitungssystems der Parkbremseinrichtung 1 verbunden.

Mittels dieses Ventils 54 der Luftaufbereitungseinheit der Parkbremseinrichtung 1 ist das Select-High-Ventil 48 ansteuerbar, insbesondere wobei mittels des Ventils 54 der Luftaufbereitungseinheit der Parkbremseinrichtung 1 das Select-High-Ventil 48 im Zusammenhang mit der Trailer-Test-Funktion ansteuerbar ist.

Wie in Figur 1 ersichtlich, ist in den Steuerleitungen des Steuerventils 20 kein Select-Low-Ventil und auch kein Select-Low-Ventil stromaufwärts des Relaisventils 38 angeordnet.

Des Weiteren ist auch kein Drucksensor stromabwärts des Steuerventils 20 und/oder stromaufwärts des Relaisventils 38 angeordnet.

In der Leitung 35, die den Anschluss 20c des Steuerventils 20 mit dem Anschluss 18b des Magnetventils 18 verbindet, ist ferner ein Schnellentlüftungsventil 60 vorgesehen.

Somit ist das Schnellentlüftungsventil 60 zwischen dem Magnetventil 18 und der Steuerventileinrichtung 20, also dem Steuerventil 20 angeordnet.

Das Schnellentlüftungsventil 60 ist damit in einer Eingangsleitung des Steuerventils 20 angeordnet.

In der Verbindungsleitung 34, die den Ausgang 16b des Magnetventils 16 mit dem Eingang 20a des Steuerventils 20 verbindet, befindet sind kein Schnellentlüftungsventil. Das Schnellentlüftungsventil 60 ist nur in der zweiten Verbindungsleitung 35 vorhanden.

Grundsätzlich kann vorgesehen sein, dass der für die Entlüftung nutzbare Ventilquerschnitt des Schnellentlüftungsventils 60 wenigstens ca. doppelt so groß wie der nutzbare Ventilquerschnitt übriger Ventile der Parkbremseinrichtung 1 mit Entlüftungsausgang bzw. Entlüftungsfunktion ist, hier beispielsweise des zweiten Magnetventils 18, das mit dem Ausgang 18c einen Entlüftungsausgang aufweist. Im in Figur 1 gezeigten Ausführungsbeispiel ist der für die Entlüftung nutzbare Ventilquerschnitt des Schnellentlüftungsventils 60 ca. viermal so groß wie der nutzbare Ventilquerschnitt des zweiten Magnetventils 18.

Das Schnellentlüftungsventil 60 ist kein Magnetventil, sondern wird durch den Zuleitungsdruck in Richtung Verbraucher geöffnet und gibt beim Umschalten durch den Verbraucherdruck seinen Abluftanschluss frei.

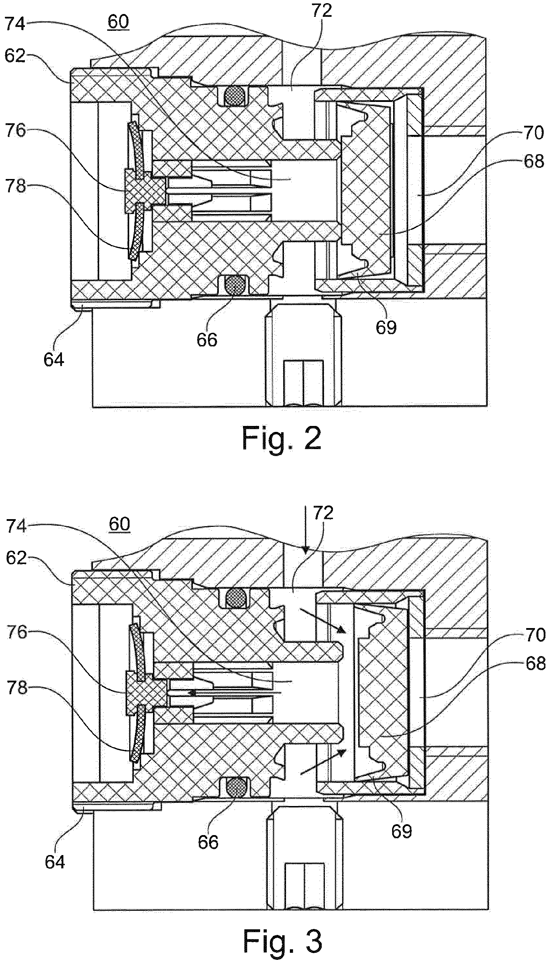

Den prinzipiellen Aufbau des Schnellentlüftungsventils 60 zeigen die Figur 2 und die Figur 3.

Das Schnellentlüftungsventil 60 ist beispielsweise ein sogenanntes ESS-Ventil.

Figur 2 zeigt das Schnellentlüftungsventil 60 im Ansteuerzustand, d.h. in einem Zustand, in dem das Schnellentlüftungsventil 60 nicht entlüftet.

Das Schnellentlüftungsventil 60 weist einen Ventilkörper 62 auf, der mittels eines Gewindes 64 in einer Halterung oder dergleichen eingeschraubt werden kann.

Mittels eines O-Ringes 66 wird das Schnellentlüftungsventil 60 in der Halterung abgedichtet.

Im Ventilkörper 62 ist eine RV-Membran 68 mit einer schräg angestellten Dichtlippe 69 beweglich geführt.

Das Schnellentlüftungsventil 60 weist einen Eingang 70 und einen Ausgang 72 auf.

Außerdem ist ein Abluftanschluss 74 vorgesehen.

Das Schnellentlüftungsventil 60 weist im Bereich seines Abluftanschlusses 74 eine von einem Stift 76 getragene, zumindest teilweise elastische Entlüftungsscheibe 78 auf.

Figur 3 zeigt das Schnellentlüftungsventil 60 im Entlüftungszustand, d.h. in einem Zustand, in dem das Schnellentlüftungsventil 60 entlüftet.

Im in Figur 2 gezeigten Ansteuerzustand des Schnellentlüftungsventils 60 wird die RV-Membran 68 durch den Ansteuerdruck, der im Eingang 70 anliegt, gegen den Abluftanschluss 74 angestellt, der dadurch verschlossen wird. Der Abluftanschluss 74 ist somit drucklos bzw. bei Atmosphärendruck.

Im Entlüftungszustand, wie in Figur 3 gezeigt, wird die RV-Membran durch die vom Steuerventil 20 über den Ausgang 72 ankommende Luft gegen den Eingang 70 angestellt, so dass der Abluftanschluss 74 freigegeben wird und das Schnellentlüftungsventil 60 zum Magnetventil 18 hin im Wesentlichen abgedichtet ist.

Die Entlüftungsscheibe 78 wird durch die ausströmende Luft derart verformt, dass die Luft ausströmen kann.

Im Ansteuerzustand verhindert die Entlüftungsscheibe 78, dass Verunreinigungen durch den Abluftanschluss 74 eindringen können.

Im Folgenden wird die Wirkungsweise der Parkbremseinrichtung 1 gemäß Figur 1 erläutert.

Die Einrichtung hat zwei sichere, stabile Zustände, nämlich den normalen Fahrzustand und den Zustand der aktivierten Parkbremse (wie in Figur 1 gezeigt). Bei Ausfall der elektrischen Versorgung wird der unmittelbar dem Ausfall vorhergehende Zustand stabil beibehalten.

Die Sicherheitsfunktion wird durch das bistabile Steuerventil 20 realisiert. Dieses Steuerventil 20 wird in der in Figur 1 dargestellten Parkstellung durch die Feder 21 gehalten. Die Anschlüsse 20b und 20c des Steuerventils 20 sind verbunden und über das zweite Magnetventil 18 über den Eingang 18b zu dessen Entlüftungsausgang 18c hin entlüftet.

Über eine Steuerleitung 23 (gestrichelt eingezeichnet) wird Atmosphärendruck an den pneumatischen Steuereingang 29 des Steuerventils 20 und auch an den Steuereingang 28 über die Steuerleitung 26 angelegt, so dass das Steuerventil 20 deaktiviert und durch die Feder 21 in die dargestellte Stellung gebracht ist. Dies ist einer der zwei stabilen Zustände des Steuerventils 20.

In der Parkposition ist auf der Leitung 36 normalerweise kein Druck (Betriebsbremse deaktiviert), so dass über das Select-High-Ventil 22 ebenfalls Atmosphärendruck an den pneumatischen Steuereingang 38a des Relaisventils 38 gelangt. Dieses ist damit entlüftet, so dass auch die Federkammer des Federspeicher-Bremszylinders (nicht näher dargestellt, über die Leitung 42 angeschlossen) entlüftet ist und damit die Parkbremse angelegt bzw. aktiviert ist.

Bei deaktivierter Parkbremse, d.h. im Fahrzustand, ist das Steuerventil 20 durchgeschaltet, d.h. aktiviert. Der Eingang 20a ist dann mit dem Ausgang 20b verbunden. In diesem Zustand werden die Steuereingänge 28 und 39 des Steuerventils 20 mit Druck beaufschlagt, so dass das Steuerventil 20 stabil in diesem Zustand gehalten wird.

Über das aktivierte Steuerventil 20 gelangt Druck von der Druckmittelquelle über das Rückschlagventil 10 auch zum Steuereingang 38a des Relaisventils 38, welches durchschaltet und damit die Federkammer des Federspeicher-Bremszylinders der Betriebsbremse des Kraftfahrzeugs bzw. Zugfahrzeugs über die Leitung 42 mit Druck beaufschlagt und damit die Betriebsbremse löst. Somit ist die Sicherheitsfunktion realisiert, d.h. beide beschriebenen Betriebszustände sind jeweils für sich stabil, unabhängig von dem Zustand der Stromversorgung der Magnetventile 16 und 18. Umschalten von Parkbremse auf Fahrzustand

Durch Betätigen des zweiten Magnetventils 18 wird dessen Eingang 18a mit dem Ausgang 18b verbunden. Damit gelangt Druckluft aus der Druckmittelquelle über das Rückschlagventil 10 zum Anschluss 20c des Steuerventils 20, von dessen Ausgang 20b zur Steuerleitung 26. Somit gelangt hoher Druck über die Steuerleitung 26 zum Steuereingang 28. Da auch das Magnetventil 16 durchgeschaltet ist, gelangt auch über die Steuerleitung 26 hoher Druck zum Steuereingang 28. Auch über die Steuerleitung 23 gelangt hoher Druck zum weiteren Steuereingang 29 des Steuerventils 20. Dadurch wird das Steuerventil 20 durchgeschaltet und der Eingang 20a mit dem Ausgang 20b verbunden.

Über das Select-High-Ventil 22 gelangt dieser Druck an den Steuereingang 38a des Relaisventils 38, das durchschaltet und somit den Druck von seinem Eingang 38c zur Federkammer des Federspeicher-Bremszylinders über die Leitung 42 gelangen lässt, so dass die Betriebsbremse des Kraftfahrzeugs bzw. Zugfahrzeugs gelöst wird. Das Steuerventil 20 ist dann in der zweiten, durch Druck gehaltenen stabilen Position.

### Umschalten vom Fahrzustand zur Parkbremse

Das Umschalten vom Fahrzustand zur Parkbremse erfolgt durch das erste Magnetventil 16 und durch das zweite Magnetventil 18 sowie über das Entlüftungsventil 33. Wird das erste Magnetventil 16 aktiviert, so werden sein Eingang 16a und sein Ausgang 16b abgesperrt. Außerdem wird das zweite Magnetventil 18 derart geschaltet, dass der Eingang 18a gesperrt und die Ausgänge 18b und 18c miteinander verbunden sind. Somit kann Druck über das Schnellentlüftungsventil 60 und auch den Entlüftungsausgang 18c entweichen. Da auch das Entlüftungsventil 33 derart geschaltet wird, dass der Eingang 33a und der Ausgang 33b miteinander verbunden sind, so dass über den Entlüftungsausgang 33b entlüftet werden kann, sinkt der Druck in den Steuerleitungen 23 und 30 ab.

Sobald dieser Druck einen vorgegebenen Schwellwert erreicht hat, der unter Anderem durch die Kraft der Feder 21 einstellbar ist, schaltet das Steuerventil 20 in die in Figur 1 gezeigte Ruhestellung zurück.

Der vorgegebene Schwellwert ist dazu erforderlich, dem System zu ermöglichen, zwischen Umschaltung auf Parkbremse und proportionalem Bremsen zu unterscheiden. Das Relaisventil 38 erhält an seinem Steuereingang 38a ebenfalls diesen niedrigen Druck. Es wird dadurch in die Entlüftungsstellung gebracht, wodurch die Federkammer des Federspeicher-Bremszylinders der Betriebsbremse entlüftet und damit die Parkbremse aktiviert wird.

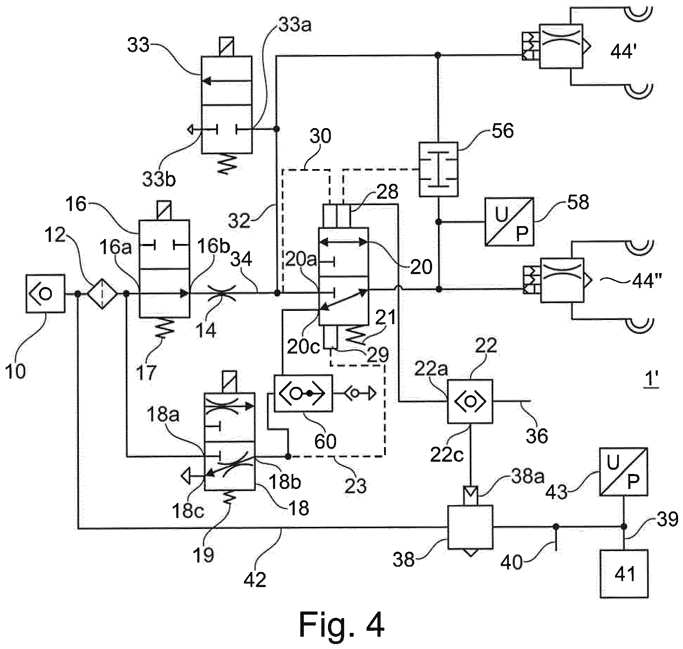

Figur 4 zeigt eine schematische Darstellung eines zweiten Ausführungsbeispiels einer erfindungsgemäßen Parkbremseinrichtung 1' für Kraftfahrzeuge.

Dabei sind zum einfacheren Verständnis identische Elemente der Parkbremseinrichtung 1' mit denselben Bezugszeichen wie in Figur 1 gezeigt und beschrieben gekennzeichnet. Die Parkbremseinrichtung 1' weist im Wesentlichen die identische Funktionalität betreffend das Umschalten von der Parkbremse zum Fahrzustand und vom Fahrzustand zur Parkbremse wie die vorstehende beschriebene und in Figur 1 gezeigte Parkbremseinrichtung 1 auf.

### Unterschiede bestehen jedoch wie folgt:

Die Anhängersteuermodule 44' und 44" sind nicht stromabwärts des Relaisventils 38 angeordnet, sondern stromabwärts des Steuerventils 20 und stromaufwärts des Relaisventils 38.

In den zu den Anhängersteuermodulen 44' und 44" führenden Steuerleitungen und stromaufwärts des Select-High-Ventils 22 und des Relaisventils 38 sind ein Select-Low-Ventil 56 und ein Drucksensor 58 vorgesehen.

Vergleichbare Systeme wie die in Figur 4 gezeigte Parkbremseinrichtung 1' sind beispielsweise in der DE 10 2008 007 877 B3 oder in der DE 10 2009 059 816 B3 beschrieben, auch hinsichtlich weiterer Funktionen wie Sicherheitsfunktion, proportionales Bremsen, Trailer-Test-Funktion und Anti-Compound-Funktion.

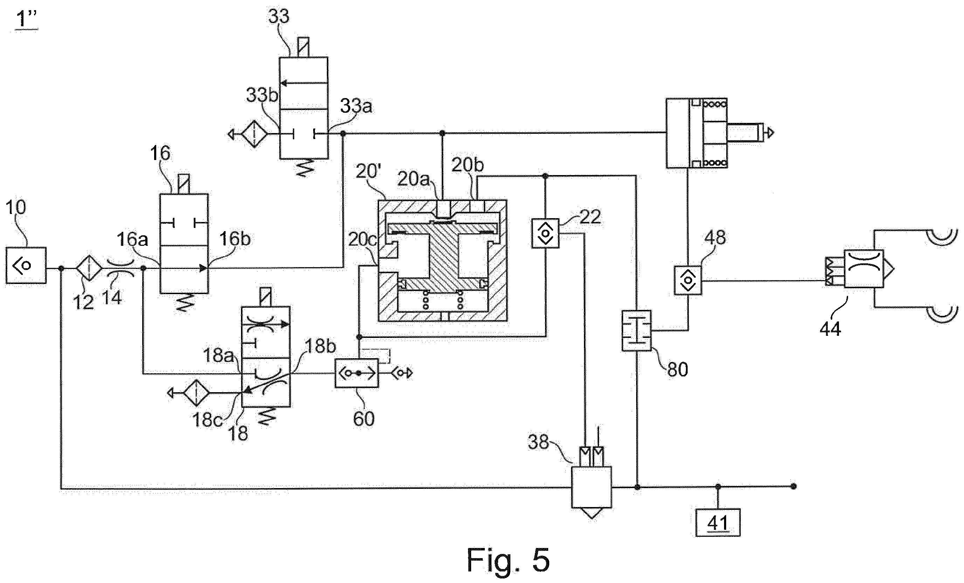

Figur 5 zeigt eine schematische Darstellung eines dritten Ausführungsbeispiels einer erfindungsgemäßen Parkbremseinrichtung 1" für Kraftfahrzeuge, das eine Modifikation des in Figur 1 gezeigten Ausführungsbeispiels darstellt.

Zum einfacheren Verständnis sind identische Elemente der Parkbremseinrichtung 1" mit denselben Bezugszeichen wie in Figur 1 gezeigt und beschrieben gekennzeichnet. Die Parkbremseinrichtung 1" weist im Wesentlichen die identische Funktionalität betreffend das Umschalten von der Parkbremse zum Fahrzustand und vom Fahrzustand zur Parkbremse wie die vorstehend beschriebene und in Figur 1 gezeigte Parkbremseinrichtung 1 auf.

Auch hier ist das Anhängersteuermodul 44 stromabwärts des Relaisventils 38 angeordnet. Allerdings ist hier dem Select-High-Ventil 48 noch ein weiteres Select-Low-Ventil 80 vorgeschaltet.

Das Steuerventil 20' des dritten Ausführungsbeispiels ist beispielsweise in der WO 2014/009457 A1 beschrieben.

## Patentansprüche

1. Parkbremseinrichtung (1; 1'; 1") für Kraftfahrzeuge mit wenigstens einer Druckluftquelle und mit wenigstens einer Steuerventileinrichtung (20), wobei die Steuerventileinrichtung (20) wenigstens einen ersten Anschluss (20a) und wenigstens einen zweiten Anschluss (20c) aufweist, die jeweils über eine erste Verbindungsleitung (34) und eine zweite Verbindungsleitung (35) mit der Druckluftquelle verbindbar sind, wobei die Verbindungsleitungen (34, 35) stromabwärts der Druckluftquelle angeordnet sind, **dadurch gekennzeichnet, dass** in wenigstens einer Verbindungsleitung (35) ein Schnellentlüftungsventil (60) angeordnet ist.

2. Parkbremseinrichtung (1; 1'; 1") nach Anspruch 1, **dadurch gekennzeichnet, dass** stromabwärts der Druckluftquelle ein Rückschlagventil (10) vorgesehen ist.

3. Parkbremseinrichtung (1; 1'; 1") nach Anspruch 2, **dadurch gekennzeichnet, dass** das Schnellentlüftungsventil (60) stromabwärts des Rückschlagventils (10) angeordnet ist.

4. Parkbremseinrichtung (1; 1'; 1") nach einem der vorhergehenden Ansprüche, **dadurch gekennzeichnet, dass** in der ersten Verbindungsleitung (34) ein erstes Magnetventil (16) angeordnet ist und in der zweiten Verbindungsleitung (35) ein zweites Magnetventil (18) angeordnet ist, wobei das wenigstens eine Schnellentlüftungsventil (60) zwischen einem Magnetventil (18) und der Steuerventileinrichtung (20) angeordnet ist.

5. Parkbremseinrichtung (1; 1'; 1") nach Anspruch 4, **dadurch gekennzeichnet, dass** das Schnellentlüftungsventil (60) nur in der zweiten Verbindungsleitung (35) vorhanden ist.

6. Parkbremseinrichtung (1; 1'; 1") nach einem der vorhergehenden Ansprüche, **dadurch gekennzeichnet, dass** der für die Entlüftung nutzbare Ventilquerschnitt des Schnellentlüftungsventils (60) wenigstens ca. doppelt so groß ist, insbesondere ca. viermal so groß ist, wie der nutzbare Ventilquerschnitt übriger Ventile der Parkbremseinrichtung (1; 1'; 1") mit Entlüftungsausgang bzw. Entlüftungsfunktion.

7. Parkbremseinrichtung (1; 1'; 1") nach Anspruch 4 oder Anspruch 5 und Anspruch 6, **dadurch gekennzeichnet, dass** das zweite Magnetventil (18) einen Entlüftungsausgang (18c) aufweist.

8. Parkbremseinrichtung (1; 1'; 1") nach einem der vorhergehenden Ansprüche, **dadurch gekennzeichnet, dass** das Schnellentlüftungsventil (60) kein Magnetventil ist.

9. Parkbremseinrichtung (1; 1'; 1") nach einem der vorhergehenden Ansprüche, **dadurch gekennzeichnet, dass** das Schnellentlüftungsventil (60) durch den Zuleitungsdruck in Richtung Verbraucher, insbesondere Steuerventileinrichtung (20), geöffnet wird und beim Umschalten durch den Verbraucherdruck seinen Abluftanschluss (74) freigibt.

10. Parkbremseinrichtung (1; 1'; 1") nach einem der vorhergehenden Ansprüche, **dadurch gekennzeichnet, dass** das Schnellentlüftungsventil (60) im Bereich seines Abluftanschlusses (74) eine zumindest teilweise elastische Entlüftungsscheibe (78) aufweist.

## Claims

1. Parking brake device (1; 1'; 1") for motor vehicles, having at least one compressed-air source and having at least one control valve device (20), wherein the control valve device (20) has at least one first port (20a) and at least one second port (20c) which are connectable in each case via a first connecting line (34) and a second connecting line (35) to the compressed-air source, wherein the connecting lines (34, 35) are arranged downstream of the compressed-air source, **characterised in that** a rapid vent valve (60) is arranged in at least one connecting line (35).

2. Parking brake device (1; 1'; 1") according to claim 1, **characterised in that** a check valve (10) is provided downstream of the compressed-air source.

3. Parking brake device (1; 1'; 1") according to claim 2, **characterised in that** the rapid vent valve (60) is arranged downstream of the check valve (10).

4. Parking brake device (1; 1'; 1") according to any of the preceding claims, **characterised in that** a first solenoid valve (16) is arranged in the first connecting line (34), and a second solenoid valve (18) is arranged in the second connecting line (35), wherein the at least one rapid vent valve (60) is arranged between a solenoid valve (18) and the control valve device (20).

5. Parking brake device (1; 1'; 1") according to claim 4, **characterised in that** the rapid vent valve (60) is provided only in the second connecting line (35).

6. Parking brake device (1; 1'; 1") according to any of the preceding claims, **characterised in that** the valve cross-section, usable for venting, of the rapid vent valve (60) is at least approximately twice as large, in particular approximately four times as large, as the usable valve cross-section of other valves of the parking brake device (1; 1'; 1") with venting outlet or venting function.

7. Parking brake device (1; 1'; 1") according to claim 4 or claims 5 and 6, **characterised in that** the second solenoid valve (18) has a venting outlet (18c).

8. Parking brake device (1; 1'; 1") according to any of the preceding claims, **characterised in that** the rapid vent valve (60) is a not a solenoid valve.

9. Parking brake device (1; 1'; 1") according to any of the preceding claims, **characterised in that** the rapid vent valve (60) is opened in the direction of a consumer, in particular control valve device (20), by the feed line pressure, and opens up its exhaust-air port (74) when switched by the consumer pressure.

10. Parking brake device (1; 1'; 1") according to any of the preceding claims, **characterised in that** the rapid vent valve (60) has an at least partially elastic venting disc (78) in the region of its exhaust-air port (74).

## Revendications

1. Dispositif (1; 1'; 1") de frein de stationnement de véhicules automobiles, comprenant au moins une source d'air comprimé et au moins un dispositif (20) de soupape de commande, le dispositif (20) de soupape (20) de commande ayant au moins un premier raccord (20a) et au moins un deuxième raccord (20c), qui peuvent communiquer avec la source d'air comprimé, respectivement par un premier conduit (34) de communication et par un deuxième conduit (35) de communication, les conduits (34, 35) de ommunication étant disposés en aval de la source d'air comprimé, **caractérisé en ce qu'**une soupape (60) de mise rapidement à l'atmosphère est montée dans au moins un conduit (35) de communication.

2. Dispositif (1; 1'; 1") de frein de stationnement suivant la revendication 1, **caractérisé en ce qu'**un clapet anti-retour (10) est prévu en aval de la source d'air comprimé.

3. Dispositif (1; 1'; 1") de frein de stationnement suivant la revendication 2, **caractérisé en ce que** la soupape (60) de mise rapidement à l'atmosphère est montée en aval du clapet anti-retour (10).

4. Dispositif (1; 1'; 1") de frein de stationnement suivant l'une des revendications précédentes, **caractérisé en ce qu'**une première électrovanne (16) est montée dans le premier conduit (34) de communication et une deuxième électrovanne (18) est montée dans le deuxième conduit (35) de communication, la au moins une soupape (60) de mise rapidement à l'atmosphère étant montée entre une électrovanne (18) et le dispositif (20) de soupape de commande.

5. Dispositif (1; 1'; 1") de frein de stationnement suivant la revendication 4, **caractérisé en ce que** la soupape (60) de mise rapidement à l'atmosphère n'est présente que dans le deuxième conduit (35) de communication.

6. Dispositif (1; 1'; 1") de frein de stationnement suivant l'une des revendications précédentes, **caractérisé en ce que** la section transversale utile pour la mise à l'atmosphère de la soupape (60) de mise rapidement à l'atmosphère est au moins environ deux fois aussi grande, notamment environ deux fois aussi grande, que la section utile des autres soupapes et vannes du dispositif (1; 1'; 1") de frein de stationnement à sortie de mise à l'atmosphère ou à fonction de mise à l'atmosphère.

7. Dispositif (1; 1'; 1") de frein de stationnement suivant la revendication 4 ou la revendication 5 et la revendication 6, **caractérisé en ce que** la deuxième électrovanne (18) a une sortie (18c) de mise à l'atmosphère.

8. Dispositif (1; 1'; 1") de frein de stationnement suivant l'une des revendications précédentes, **caractérisé en ce que** la soupape (60) de mise rapidement à l'atmosphère n'est pas une électrovanne.

9. Dispositif (1; 1'; 1") de frein de stationnement suivant l'une des revendications précédentes, **caractérisé en ce que** la soupape (60) de mise rapidement à l'atmosphère est, par la pression d'arrivée, ouverte en direction d'un consommateur, notamment d'un dispositif (20) de soupape de commande et, à la commutation, libère par la pression du consommateur son raccord (74) d'évacuation.

10. Dispositif (1; 1'; 1") de frein de stationnement suivant l'une des revendications précédentes, **caractérisé en ce que** la soupape (60) de mise rapidement à l'atmosphère a, dans la partie de son raccord (74) d'évacuation, un disque (78) de mise à l'atmosphère élastique, au moins en partie.
